## Europäisches Patentamt

## European Patent Office

## Office européen des brevets

(11) Veröffentlichungsnummer: **0 258 445**
**A1**

(12) **EUROPÄISCHE PATENTANMELDUNG**

Veröffentlicht nach Art. 158 Abs. 3 EPÜ

(21) Anmeldenummer: 87901269.8

(22) Anmeldetag: 08.12.86

Daten der zugrundeliegenden internationalen Anmeldung:

(86) Internationale Anmeldenummer:
PCT/SU86/00125

(87) Internationale Veröffentlichungsnummer:
WO87/05133 (27.08.87 87/19)

(51) Int. Cl.³: **G 05 D 7/00**

(30) Priorität: 13.02.86 SU 4017082

(43) Veröffentlichungstag der Anmeldung:
09.03.88 Patentblatt 88/10

(84) Benannte Vertragsstaaten:
AT CH DE FR GB LI SE

(71) Anmelder: TALLINSKOE PROIZVODSTVENNOE
UPRAVLENIE VODOSNABZHENIA I KANALIZATSII
ul. Yadala, 10
Tallin, 200006(SU)

(72) Erfinder: SUTT, Iokhannes Iokhannesovich
ul. Vyistluse, 23/25-69
Tallin, 200001(SU)

(74) Vertreter: Lehn, Werner, Dipl.-Ing. et al,
Hoffmann, Eitle & Partner Patentanwälte Arabellastrasse
4
D-8000 München 81(DE)

(54) VORRICHTUNG ZUR AUTOMATISCHEN DOSIERUNG EINES GASES IN EINE FLÜSSIGKEIT.

(57) A device for automatic dosage of a gas into a liquid comprises a gas pressure regulator (1), a gas flowrate meter (2), a gas flowrate regulator (3), a one-way vacuum restrictor valve and an ejector (5) connected to the main for the gasified liquid as well as a liquid flowrate meter (9) and a control system (39). The gasflow rate regulator (3) and the one-way vacuum restrictor valve are designed as a combined unit, which comprises a sealed chamber (11), two opposite walls of which are constituted by membranes (12, 13), a hollow cylinder (14) located between the membranes and provided on its butt-end with a central opening (17), a bushing (19) mounted in the centre of the membrane (13) and rigidly connected, by its closed butt-end, with an output element (26) of an actuating mechanism (27) of the gas flowrate regulator (3), a needle valve with a seat (21), and a closing member shaped as a rod (21) with a pointed cap (23) at the end.

Croydon Printing Company Ltd.

EINRICHTUNG ZUR AUTOMATISCHEN DOSIERUNG EINES
GASES IN EINE FLÜSSIGKEIT

Technisches Gebiet

Die Erfindung bezieht sich auf eine Einrichtung zur Dosierung von Flüssigkeiten und betrifft insbesondere eine Einrichtung zur Dosierung eines Gases in eine Flüssigkeit, beispielsweise des Chlors ins Wasser.

Zugrunde liegender Stand der Technik

Es ist eine Einrichtung zur automatischen Dosierung eines Gases in eine Flüssigkeit bekannt, die in einer Gasleitung hintereinander angeordnet einen Gasmengenmesser, einen Gasmengenregler, ein Vakuum-Rückschlagventil und einen Ejektor zur Herstellung eines Gas-Flüssigkeitsgemisches enthält. Der Ejektor ist mit der Leitung der zu durchgasenden Flüssigkeit hydraulisch verbunden, welche mit einem Flüssigkeitsmengenmesser ausgestattet ist. Die bekannte Einrichtung enthält ferner ein Steuersystem, an dessen Eingänge Signale von den Ausgängen der Flüssigkeits- und der Gasmengenmesser gelangen, wobei das System einen Sollwertgeber des Gas-Flüssigkeit-Verhältnisses aufweist. Vom Ausgang des Steuersystems kommt am Eingang des Gasmengenreglers ein Signal zur Gewährleistung einer vorgegebenen Konzentration des Gases in der Flüssigkeit an (siehe SU-Urheberschein Nr. 292540, Klasse G 01 f 13/00, veröffentlicht im Jahre 1973).

Jedoch gewährleistet diese Einrichtung keine erforderliche Genauigkeit der Aufrechterhaltung einer vorgegebenen Konzentration des Gases in der Flüssigkeit bei dem sich rasch ändernden Grad der Gasaufnahme durch die Flüssigkeit und bei abrupten Veränderungen des Flüssigkeitsdurchsatzes.

Es ist weiterhin eine Einrichtung zur automatischen Dosierung eines Gases in eine Flüssigkeit, im besonderen des Chlors ins Wasser, bekannt, die in einer Gasleitung hintereinander angeordnet einen Gasdruckregler, einen Gasmengenmesser, einen Gasmengenregler, ein Vakuum-Rückschlagventil und einen an die Leitung der zu durchgasenden Flüssigkeit angeschlossenen Ejektor, einen Flüssigkeitsmengenmesser in der Flüssigkeitsleitung und ein Steuersystem enthält, welches mit den Eingängen an die Ausgänge des Gas- bzw. des Flüssigkeitsmengenmessers und mit dem Ausgang an den Stellmechanismus des Gasmengenreglers angeschlossen ist (siehe die US-PS Nr. 4232700; Klasse G 05 D 11/08, veröffentlicht im Jahre 1980).

Die bekannte Einrichtung enthält überdies ein Messgerät für die Konzentration des Gases in der Flüssigkeit, das in der Flüssigkeitsleitung in einem Abstand von der Anschlusstelle des Ejektor in Strömungsrichtung der Flüssigkeit eingebaut ist. Auf ein Signal vom Ausgang des Konzentrationsmessgerätes wird eine Korrektur der Einstellung des Gas-Flüssigkeit-Verhältnisses am Sollwertgeber vorgenommen.

Diese Einrichtung ermöglicht es, die Änderung des Grades der Gasaufnahme durch die Flüssigkeit zu berücksichtigen, und gewährleistet die Aufrechterhaltung einer vorgegebenen Konzentration des Gases in der Flüssigkeit.

Die bekannte Einrichtung ist jedoch in konstruktiver Hinsicht kompliziert, ihr mechanischer Teil enthält eine grosse Anzahl von Elementen, darunter auch von nichtlinearen Elementen, z.B. ein Vakuum-Rückschlagventil, was zur Entstehung von Schwingvorgängen im Regelungssystem führt, welche eine rasche Wiederherstellung eines vorgegebenen Flüssigkeit-Gas-Verhältnisses verhindern.

Offenbarung der Erfindung

Der Erfindung liegt die Aufgabe zugrunde, eine Einrichtung zur automatischen Dosierung eines Gases in eine Flüssigkeit zu entwickeln, die in konstruktiver Hinsicht einfacher wäre und eine kleinere Anzahl von nichtlinearen Elementen in ihrem mechanischen Teil hätte, was die Regelgüte und die Funktionssicherheit der Einrichtung zu erhöhen erlauben würde.

Die gestellte Aufgabe wird dadurch gelöst, dass in der Einrichtung zur automatischen Dosierung eines Gases in eine Flüssigkeit, die in einer Gasleitung hintereinander angeordnet einen Gasdruckregler, einen Gasmengenmesser, einen Gasmengenregler, ein Vakuum-Rückschlagventil und einen an die Leitung der zu durchgasenden Flüssigkeit angeschlossenen Ejektor, einen Flüssigkeitsmengenmesser in der Flüssigkeitsleitung und ein Steuersystem enthält, welches mit den Eingängen an die Ausgänge des Gas- bzw. des Flüssigkeitsmengenmessers und mit dem Ausgang an den Stellmechanismus des Gasmengenreglers geschaltet ist, erfindungsgemäss der Gasmengenregler und das Vakuum-Rückschlagventil in Form einer einheitlichen Baugruppe ausgeführt sind, die eine hermetische Kammer, deren zwei gegenüberliegende Wände von zwei parallel zueinander angeordneten Membranen gebildet sind, einen zwischen den Membranen befindlichen Hohlzylinder, der über eine Stirnseite mit einer der Membranen starr verbunden und zur hin- und hergehenden Bewegung zusammen mit dieser Membran längs der eigenen Achse vorgerichtet ist, sowie in der anderen Stirnseite eine Mittenbohrung aufweist, eine an einer Stirnseite geschlossene Büchse, die gleichachsig mit dem Zylinder in den Mittelpunkt der anderen Membran eingebaut und über die geschlossene Stirnseite mit dem Ausgangselement des Stellmechanismus des Gasmengenreglers starr verbunden ist, und ein Nadelventil umfasst, dessen Sitz innerhalb des Hohlzylinders koaxial zu diesem angeordnet und in die Seitenwand eines Blindstutzens eingebaut ist, welcher mit dem Hohlraum des Gasmengenmessers in Verbindung steht und durch einen Schlitz in der Seitenwand des Zylinders hindurchgeführt ist, und dessen Absperorgan in Form eines längs der Zylinderachse gelegenen Stabes mit einem zugespitzten Aufsatz an einem Ende ausgebildet ist, wobei das den Aufsatz aufweisende Ende des Stabes durch die Mittenbohrung in der Stirnseite in den Hohlraum des Zylinders eingeführt ist, derart, dass das zugespitzte Stabende zur Zusammenwirkung mit dem Sitz und die Grundfläche des Aufsatzes zur Zusammenwirkung mit der Innenfläche der Stirnseite des Hohlzylinders vorgerichtet ist, während das andere Stabende in der Büchse so angeordnet ist, dass es mit der geschlossenen Stirnseite der Büchse unter Einwirkung eines elastischen Elementes und der hin- und hergehenden Bewegung zusammenwirken kann.

In der Einrichtung zur automatischen Dosierung eines Gases in eine Flüssigkeit, ausgeführt gemäss der vorliegenden Erfindung, ist es durch Vereinigung des Vakuum-Rückschlagventils und des Gasmengenreglers in einer Baugruppe gelungen, den vom Sitz und dem Absperrorgan des Vakuum-Rückschlagventils herrührenden nichtlinearen Strömungswiderstand aus dem Regelkreis zu eliminieren, was eine Erhöhung der Regelgüte und der Stabilität des Regelungssystems gewährleistet.

Die Einrichtung gemäss der Erfindung ist gegenüber den bekannten Einrichtungen ähnlicher Zweckbestimmung kompakter, besitzt eine kleinere Anzahl von Elementen und ist einfacher in der Herstellung.

Kurze Beschreibung der Zeichnungen

Im folgenden wird die Erfindung durch Beschreibung einer konkreten Ausführungsform derselben und anhand einer beigefügten Zeichnung erläutert, in welcher das elektromechanische Prinzipschema der erfindungsgemässen Einrichtung zur automatischen Dosierung eines Gases in eine Flüssigkeit dargestellt ist.

Beste Ausführungsform der Erfindung

Als konkrete Ausführungsform der Erfindung wird eine Einrichtung zur automatischen Dosierung eines Gases - des Chlors - in eine Flüssigkeit - ins Wasser - behandelt.

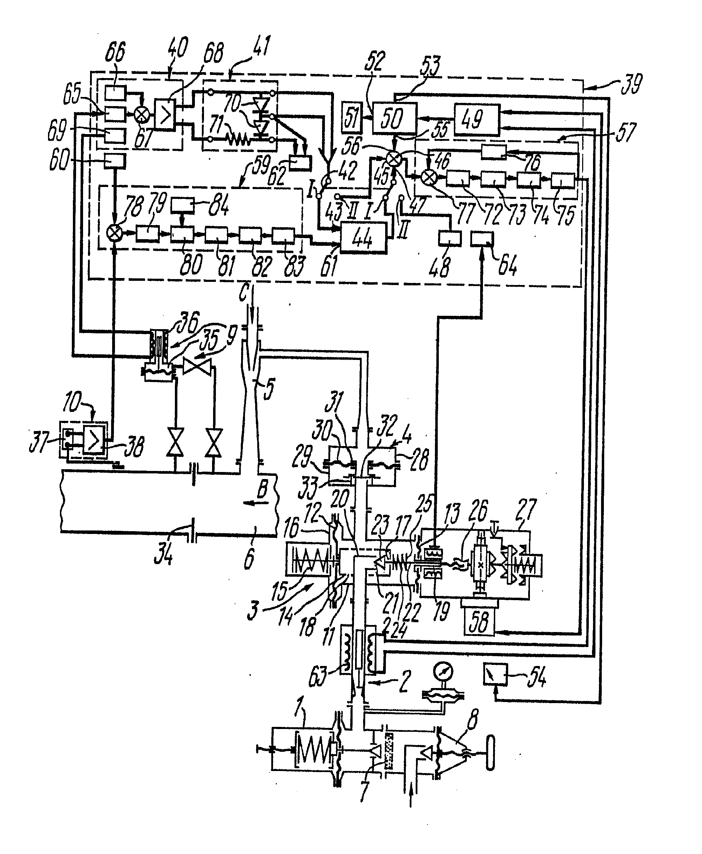

Die in der Zeichnung dargestellte Einrichtung zur automatischen Dosierung des Chlorgases ins Wasser enthält in einer Zuführungsleitung für Chlorgas hintereinander angeordnet einen Gasdruckregler 1, einen Gasmengenmesser 2 (Rotameter), einen Gasmengenregler 3, ein Rückschlagventil 4 und einen Ejektor 5, der mit einer Leitung 6 des zu chlorierenden Wassers in Verbindung steht. Vor dem Gasdruckregler 1 sind ein Filter 7 und ein Eingangsventil 8 montiert. In der Wasserleitung 6 ist ein Wassermengenmesser 9 und in einem Abstand von der Einführungsstelle des Chlorgases hinter dieser in Richtung der Wasserströmung ein Messgerät 10 für die Konzentration des Chlors im Wasser eingebaut. In der Zeichnung ist mit Pfeil A die Richtung der Chlorgaszufuhr, mit Pfeil B die Richtung der Wasserströmung in der Leitung 6 und mit Pfeil C die Richtung der Wasserzufuhr unter Druck in den Ejektor 5 angedeutet.

Der Gasmengenregler 3, der gleichzeitig die Funktion eines Vakuum-Rückschlagventils erfüllt, ist in Form einer hermetischen Kammer 11 ausgebildet, deren zwei gegenüberliegende Wände durch zwei zueinander parallele Membranen 12 und 13 gebildet sind. Zwischen den letzteren ist in der Kammer 11 ein Hohlzylinder 14 untergebracht, der über seine eine Stirnseite mit der Membran 12 starr verbunden ist. Auf der anderen Seite ist die Membran 12 durch eine auf Zug beanspruchte Feder 15 angedrückt. Die Kraft der Feder 15 ist solcherweise gewählt, dass bei einem Druck in der Kammer 11, welcher dem atmosphärischen Druck gleich ist, die Membran 12 an einen Deckel 16 angedrückt ist. In der gegenüberliegenden Stirnseite des Zylinders 14 ist eine Mittenbohrung 17 vorhanden, während in seinen Seitenwänden einander gegenüber angebrachte Schlitze 18 vorgesehen sind. Der Zylinder 14 ist längs seiner Achse gemeinsam mit der Membran 12 hin- und herbewegbar angeordnet. In den Mittelpunkt der Membran 13 ist gleichachsig mit dem Zylinder 14 eine an dem vom Zylinder 14 entfernten Ende geschlossene Büchse 19 eingebaut. In den Hohlraum des Zylinders 14 ist durch den Schlitz 18 ein Blindstutzen 20 eingeführt, der mit dem Hohlraum der Kammer des Gasmengenmessers 2 in Verbindung steht. Hierbei ist die Länge der Schlitze 18 in Achsrichtung des Zylinders 14 ausreichend für die Gewährleistung der hin- und hergehenden Bewegung des Zylinders 14 gewählt. In die Seitenwand des Blindstutzens 20 ist ein zum Zylinder 14 koaxialer Sitz 21 eines Nadelventils eingebaut. Das Absperrorgan des Nadelventils ist in Gestalt eines zylindrischen Stabes 22 mit einem an seinem Ende befindlichen, zugespitzten (konischen) Aufsatz 23 ausgebildet, wobei der Durchmesser der Grundfläche des konischen Aufsatzes 23 den Durchmesser des Stabes 22 übersteigt und der Aufsatz 23 in seinem breitesten Teil über die Grenzen des Kreisumfanges des Stabes 22 hinausragt. Der Stab 22 liegt entlang der Achse des Zylinders 14 und sein mit dem Aufsatz 23 ausgestattetes Ende ist durch die Bohrung 17 in den Hohlraum des Zylinders 14 derart eingeführt, dass der Stab 22 über das zugespitzte Ende mit dem Sitz 21 und über den hinausragenden Teil der Grundfläche des Aufsatzes 23 mit der Innenfläche der Stirnseite des Zylinders 14 zusammenwirken kann. Das andere Ende des Stabes 22 ist in der Büchse 19 längs ihrer Achse hin- und herbewegbar und mit Möglichkeit der Zusammenwirkung mit dem geschlossenen Ende der Büchse 19 unter der Wirkung eines elastischen Elementes - einer Feder 24 - angeordnet, die auf Druck beansprucht ist und zwischen einem Anschlag 25 am Stab 22 und der äusseren Stirnseite des Hohlzylinders 14 angeordnet ist. Die Büchse 19 ist über die geschlossene Stirnseite mit dem Ausgangselement 26 des Stellmechanismus 27 des Gasmengenreglers 3 starr verbunden.

Das Rückschlagventil 4 besitzt ein aus zwei Teilen 28 und 29 bestehendes Gehäuse. Zwischen den Teilen 28, 29 des Gehäuses ist eine Membran 30 montiert, in deren Mitte ein Sitz 31 eingebaut ist. Unter dem Sitz 31 befindet sich ein Absperrorgan 32, das längs Führungen 33 verschiebbar angeordnet ist. Das Ventil 5 ist geschlossen, wenn kein Gas von der Gasleitung zuströmt.

Der Flüssigkeitsmengenmesser 9 schliesst ein begrenzendes Mittel - eine in der Flüssigkeitsleitung 6 befindliche Zwischenwand 34 - und ein Differentialmanometer 35 mit einem Differentialtransformatorgeber 36 ein.

Das Messgerät 10 für die Konzentration des Chlorgases im Wasser enthält einen Geber 37, der an einen Gleichstrom-

-7-

verstärker 38 angeschlossen ist.

Die Einrichtung zur automatischen Dosierung eines Gases in eine Flüssigkeit enthält auch ein Steuersystem 39, das einen Umformer 40 und einen an seinen Ausgang mit dem Eingang angeschlossenen Verteilerblock 41 umfasst, dessen Ausgang über einen gepaarten Zweipunkt-Umschalter 42 an einen Eingang 43 eines Analog-Multiplizierblocks 44 (in der Stellung I des Umschalters 42) oder an einen Eingang 45 eines logischen Blocks 46 (in der Stellung II des Umschalters 42) geschaltet ist. Der Ausgang des Blocks 44 ist über den Umschalter 42 mit einem Eingang 47 des logischen Blocks 46 (Stellung I des Umschalters 42) verbunden. In der Stellung II des Umschalters 42 ist der Eingang 47 des Blocks 46 von dem Ausgang des Blocks 44 abgeschaltet und mit dem Ausgang eines Sollwertgebers 48 des Mengenverhältnisses von Chlorgas und Wasser verbunden.

Ausserdem enthält das Steuersystem 39 einen Umformer 49, einen Verteilerblock 50, der mit dem Eingang an den Ausgang des Umformers 49 angeschlossen ist, einen Gasmengenmesser 51, der an einen Ausgang 52 des Blocks 50 angekoppelt ist. An einen Ausgang 53 des Verteilerblocks 50 ist ein Anzeiger 54 für die Chlorgasdurchsatzmenge angeschlossen, der sich in der unmittelbaren Nähe des Gasmengenreglers 3 befindet, und ein Ausgang 55 des Blocks 50 ist mit einem Eingang 56 des logischen Blocks 46 verbunden. An den Ausgang des letzteren ist mit dem Eingang eine Regeleinheit 57 angeschlossen, deren Ausgang den Ausgang des Steuersystems 39 darstellt und an den Elektromotor 58 des Stellmechanismus 27 des Gasmengenreglers 3 angeschlossen ist.

Das Steuersystem 39 schliesst auch einen Block 59 für dynamische Umwandlungen ein, an dessen Eingang Signale vom Messgerät 10 für die Konzentration des Chlorgases im Wasser und von einem Sollwertgeber 60 der Konzentration des Chlorgases im Wasser gelangen und dessen Ausgang an einen Eingang 61 des Analog-Multiplizierblocks 44 angeschlossen ist. An den Ausgang des Verteilerblocks 41 ist ein Wasser-

-8-

mengenmesser 62 angekoppelt. Die Eingänge des Steuersystems 39 sind durch den Eingang des Umformers 40, welcher an den Ausgang des Wassermengenmessers 9 angeschlossen ist, und durch den Eingang des Umformers 49 gebildet, welcher an den Ausgang des Gasmengenreglers 2 - an den Ausgang eines Differentialtransformatorgebers 63 - angeschlossen ist. Die Einrichtung zur automatischen Dosierung ist ferner mit einem Anzeiger 64 für die Lage des beweglichen Organs (des Stabes 22) des Nadelventils ausgestattet.

Die Umformer 40 und 49 sind ähnlich ausgeführt, un jeder von ihnen enthält einen Demodulator 65 und einen Korrektor 66, welche über eine Summiereinheit 67 an einen Gleichstromverstärker 68 angeschlossen sind, und einen Ferroresonanzstabilisator 69. Hierbei ist der Ferroresonanzstabilisator 69 im Umformer 40 mit dem Differentialtransformatorgeber 36 verbunden, während der Ferroresonanzstabilisator 69 im Umformer 49 mit dem Differentialtransformatorgeber 63 verbunden ist.

Die Verteilerblöcke 41 und 50 sind ebenfalls ähnlich ausgeführt, und jeder von ihnen enthält zwei Dioden 70, die hintereinander geschaltet sind, wobei an die Anode einer der Dioden ein Widerstand 71 angeschlossen ist.

Die Regeleinheit 57 enthält in Reihe geschaltet einen Modulator 72, einen Wechselstromverstärker 73, einen Demodulator 74 und einen Magnetverstärker 75, dessen Ausgang den Ausgang der Einheit 57 darstellt und über ein Rückführteil 76 und eine Summiereinheit 77 an den Eingang des Modulators 72 angeschlossen ist. Der andere Eingang der Summiereinheit 77 stellt den Eingang der Regeleinheit 57 dar.

Der Block 59 für dynamische Umwandlungen enthält in Reihe geschaltet eine Vergleichseinheit 78, einen Analog-Frequenzwandler 79, einen gesteuerten Frequenzteiler 80, einen binären Reversierzähler 81, einen Integrations-Speicherblock 82 und einen Frequenz-Analog-Wandler 83. An den Steuereingang des Frequenzteilers 80 ist ein Sollwertgeber 84 zur Einstellung des erforderlichen Teilungsverhältnisses

- 9 -

des Frequenzteilers 80 angeschlossen. An den einen Eingang der Vergleichseinheit 78 ist mit dem Ausgang der Sollwertgeber 60 der Konzentration des Chlorgases im Wasser angekoppelt, während an den anderen Eingang derselben mit dem Ausgang das Meßgerät 10 für die Konzentration des Chlorgases im Wasser angeschlossen ist.

Als Anzeiger 54, 64 können beispielsweise Milliampermeter oder Millivoltmeter und als Messer 51 und 62 elektronische Oszillografe oder elektronische Kompensatoren zur Verwendung kommen.

Der logische Block 46 enthält eine Divisionsschaltung und eine Vergleichsschaltung. Die Eingänge der Divisionsschaltung sind die Eingänge 45 und 56 des Blocks 46, und mit den Ausgängen ist sie an einen der Eingänge der Vergleichsschaltung angeschlosen.

Die erfindungsgemäße Einrichtung zur automatischen Dosierung des Chlors ins Wasser arbeitet folgenderweise.

Das Chlorgas gelangt über das geöffnete Eingangsventil 8 zum Filter 7, in welchem die Abtrennung der mechanischen Beimischungen erfolgt. Ein konstanter Druck des Chlorgases wird durch den Druckregler 1 aufrechterhalten. Die Menge des durchströmenden Chlorgases wird mit Hilfe des am Gasmengenmesser 2 angebrachten Differentialtransformatorgebers 63 gemessen. Des weiteren strömt das Chlorgas durch den Gasmengenregler 3 und gelangt über das Rückschlagventil 4 in den Ejektor 5, wo es mit dem in Pfeilrichtung C zugeführten Wasser vermischt wird und in Form eines Gas-Flüssigkeitsgemisches in den Hauptstrom des zu chlorierenden Wassers geleitet wird, dessen Bewegungsrichtung durch den Pfeil B angedeutet ist.

Bei ausbleibender Zuführung des Druckwassers, das in Pfeilrichtung C dem Ejektor 5 zugeführt wird, ist der Druck in der Kammer 11 gleich dem atmosphärischen, die Membran 12 ist durch die Feder 15 an den Deckel 16 angedrückt, der Zylinder 14 befindet sich in der (gemäß der Zeichnung) linken Endstellung, seine Stirnfläche

- 10 -

wirkt mit ihrer Innenfläche mit der vorspringenden Grundfläche des Aufsatzes 28 zusammen, wobei dieser an den Sitz 21 angedrückt und die geschlossene Stellung des Nadelventils sichergestellt wird. Somit ist bei fehlendem Vakuum in der Gaszuführungsleitung im Abschnitt zwischen dem Ejektor 5 und der Kammer 11 das Nadelventil in der Kammer 11 geschlossen, und das Gas gelangt bei geöffnetem Ventil 8 nicht zum Ejektor 5.

Beim Einströmen des Druckwassers in den Ejektor (in Pfeilrichtung C) wird ein Vakuum erzeugt, die Membran 12 bewegt den Zylinder 14 nach rechts, wobei sich der Stab 22 unter der Wirkung der Feder 24 ebenfalls nach rechts verschiebt, indem er einen Spalt zwischen dem Sitz 21 des Nadelventils und dem zugespitzten Aufsatz 23 bildet. Das Nadelventil wird geöffnet. Das Chlorgas gelangt zum Ejektor 5.

Weiterhin wird die Lage des Stabes 22 (seines zugespitzten Aufsatzes 23) in bezug auf den Sitz 21 des Nadelventils (Offnungsverhältnis des Nadelventils) durch die Stellung des Ausgangselementes 26 des Stellmechanismus 27 des Gasmengenreglers 3 bestimmt. Hierbei dient die Büchse 19 zur Kraftübertragung vom Ausgangselement 26 zum Stab 22. Unter Einwirkung der zwischen dem Anschlag 25 und der Stirnfläche des Hohlzylinders 14 angeordneten Feder 24 wird zwischen dem Stab 22 und der Büchse 19 eine starre Verbindung so lange gebildet, bis die an den Hohlzylinder 14 starr angeschlossene Membran 12 auf den Stab 22 einzuwirken beginnt.

Das den Gasmengenregler 3 durchströmende Chlorgas gelangt über das geöffnete Nadelventil in den Hohlzylinder 14 und über die Schlitze 18 in die Kammer 11, aus welcher es über die Austrittsöffnung aus dem Gasmengenregler 3 austritt und dann zum Absperrorgan 32 des Rückschlagventils 4 gelangt.

Bei der Erzeugung eines Unterdrucks im Teil 28 des Gehäuses des Rückschlagventils 4 entsteht eine Kraft, die der Elastizitätskraft der Membran 30 entgegenwirkt. Unter dem Einfluß der Druckdifferenz am Ein- und Austritt des Ventils 4 wird der Sitz 31 gehoben, und sein unteres Ende gibt das Absperrorgan 32 frei, das sich unter der Wirkung des Gasdrucks längs den Führungen 33 hebt und dem Chlorgas den Weg durch die Kammer des Teils 29 des Gehäuses des Rückschlagventils 4 frei macht. Bei der Verringerung der Druckdifferenz am Ein- und Austritt wird der Sitz 32 unter der Einwirkung der Membran 30 abgesenkt. Hierbei wirkt der Sitz 31 seinerseits auf das Absperrorgan 32 ein, das dem Wasser den Zutritt zum Gasmengenregler 3 versperrt.

Die Menge des den Gasmengenregler 3 durchströmenden Chlorgases wird dabei mit Hilfe des Differentialtransformatorgebers 63 und des Umformers 49 gemessen, von dem ein Signal über den Verteilerblock 50 für Signale in den logischen Block 46, den Anzeiger 54 der Durchsatzmenge und den Messer 51 gelangt.

Die Wasserdurchflußmenge wird mit Hilfe der Zwischenwand 34 und des Manometers 35 gemessen. Das gemessene Signal kommt vom Differentialtransformatorgeber 36 am Umformer 40 an, und von dort gelangt es an den Verteilerblock 41 und weiter zum Wassermengenmesser 62 und über den Umschalter 42 an den Eingang 43 des Analog-Multiplizierblocks 44 oder an den Eingang 45 des logischen Blocks 46.

Die erfindungsgemäße Einrichtung kann im Betriebszustand der Regelung eines vorgegebenen Mengenverhältnisses von Wasser und Chlorgas sowie im Betriebszustand der Aufrechterhaltung einer vorgegebenen Konzentration des Chlorgases im Wasser funktionieren.

Wenn die Einrichtung im Betriebszustand der Aufrechterhaltung eines vorgegebenen Mengenverhältnisses arbeitet, dessen Größe durch den Sollwertgeber 48 des Mengenverhältnisses bestimmt wird, bringt man den Umschalter 42 in die Stellung II. Hierbei wird das dem tatsächlichen Mengenverhältnis proportionale Signal vom Ausgang der Divisionsschaltung des Blocks 46 mit dem Signal des vorgegebenen Mengenverhältnisses vom Sollwertgeber 48 verglichen, und das Abweichungssignal

- 12 -

gelangt in die Regeleinheit 57.

Das am Ausgang der Regeleinheit 57 formierte Signal wird dem Elektromotor 58 des Stellmechanismus 27 des Gasmengenreglers 3 so lange zugeführt, bis das vorgegebene Mengenverhältnis von Wasser und Chlorgas wiederhergestellt ist.

Falls die Einrichtung zur automatischen Dosierung im Betriebszustand der Aufrechterhaltung einer vorgegebenen Konzentration des Chlorgases im Wasser arbeitet, bringt man den Umschalter 42 in die Stellung I.

Durch den Sollwertgeber 60 wird die erforderliche Konzentration des Chlors im Wasser vorgegeben, woraus das Signal, das die erforderliche Konzentration charakterisiert, der Vergleichseinheit 78 zugeführt wird, dem auch das vom Meßgerät 10 für Chlor kommende Signal zugeführt wird, welches die tatsächliche Konzentration des Chlors im Wasser charakterisiert.

Diese Signale werden in der Vergleichseinheit 78 verglichen, und wenn die tatsächliche Konzentration der vorgegebenen nicht entspricht, wird das Signal vom Analog-Frequenzwandler 79 auf den gesteuerten Frequenzteiler 80 geleitet, dessen Teilungsverhältnis durch den Sollwertgeber 84 vorgegeben wird. Aus dem gesteuerten Frequenzteiler 80 gelangt das Signal in den binären Reversierzähler 81, der im Betriebszustand Addieren oder Subtrahieren je nach dem Vorzeichen des Ausgangssignals der Vergleichseinheit 78 funktioniert. Vom Ausgang des binären Reversierzählers 81 kommt ein Signal am Eingang des Integrations-Speicherblocks 82 an, mit dessen Ausgang der Eingang des Digital-Analog-Wandlers 83 verbunden ist. Am Ausgang des Blocks 59 für dynamische Umwandlungen wird ein Signal der Korrektion des Mengenverhältnisses von Chlorgas und Wasser in der Funktion der vorgegebenen Konzentration des Chlorgases im Wasser formiert. Das Signal vom Ausgang des Blocks 59 gelangt an den Eingang 61 des Analog-Multiplizierblocks 44, an dessen Eingang 43 ein der Wasserdurchflußmenge proportionales Signal vom Ausgang des Verteilerblocks 41 ankommt. Des weiteren gelangt das Signal vom Ausgang des Blocks 44 an den Eingang 47 des logischen Blocks 46, wo es mit dem Signal verglichen wird, welches am Eingang 56 desselben Blocks ankommt und der Durchsatzmenge des Chlorgases proportional ist. Auf ein Signal vom Ausgang des logischen Blocks 46 und dann der Regeleinheit 57 verschiebt der Stellmechanismus 27 des Gasmengenreglers 3 den Stab 22 des Nadelventils so lange, bis durch die Durchsatzmenge des Chlorgases die vom Sollwertgeber 60 vorgegebene Größe der Konzentration des Chlors im Wasser sichergestellt wird.

Der Umformer 40 arbeitet folgenderweise.

Die Wechselstromspannung vom Differentialtransformatorgeber 36 wird durch den Demodulator 65 in die Gleichstromspannung umgeformt und mit der Spannung des Korrektors 66 summiert. An der Summiereinheit 67 wird das resultierende Signal durch den Gleichstromverstärker 68 verstärkt, an dessen Ausgang ein der Wasserdurchflußmenge proportionales Gleichstromsignal formiert wird, das dem Verteilerblock 41 zugeführt wird. Die Speisung der Primärwicklung des Differentialtransformatorgebers 36 erfolgt mittels des im Umformer 40 montierten Speiseteils 69.

## Gewerbliche Verwertbarkeit

Die Einrichtung zur automatischen Dosierung eines Gases in eine Flüssigkeit kann in der chemischen Industrie zum Einführen z.B. von Ammoniak oder Schwefeldioxid in Flüssigkeiten, bei der Reinigung von Abwässern vorwiegend in Abwasserreinigungsanlagen bei dosierter Einführung des Chlors ins Wasser verwendet werden.

0258445

- 14 -

PATENTANSPRUCH

Einrichtung zur automatischen Dosierung eines Gases in eine Flüssigkeit, die in einer Gasleitung hintereinander angeordnet einen Gasdruckregler (1), einen Gasmengenmesser (2), einen Gasmengenregler (3), ein Vakuum-Rückschlagventil und einen an eine Leitung (6) der zu durchgasenden Flüssigkeit angeschlossenen Ejektor (5), einen Flüssigkeitsmengenmesser (9) in der Flüssigkeitsleitung (6) und ein Steuersystem (39) enthält, welches mit den Eingängen an die Ausgänge des Gas- bzw. des Flüssigkeitsmengenmessers (2,9) und mit dem Ausgang an den Stellmechanismus (27) des Gasmengenreglers (3) geschaltet ist, dadurch g e k e n n z e i c h n e t, daß der Gasmengenregler (3) und das Vakuum-Rückschlagventil in Form einer einheitlichen Baugruppe ausgeführt sind, die eine hermetische Kammer (11), deren zwei gegenüberliegende Wände von zwei parallel zueinander angeordneten Membranen (12,13) gebildet sind, einen zwischen den Membranen (12,13) befindlichen Hohlzylinder (14), der über eine Stirnseite mit einer der Membranen (12) starr verbunden und zur hin- und hergehenden Bewegung zusammen mit dieser Membran (12) längs der eigenen Achse vorgerichtet ist, sowie in der anderen Stirnseite eine Mittenbohrung (17) aufweist, eine an einer Stirnseite geschlossene Büchse (19), die gleichachsig mit dem Zylinder (14) in den Mittelpunkt der anderen Membran (13) eingebaut und über die geschlossene Stirnseite mit dem Ausgangselement (26) des Stellmechanismus (27) des Gasmengenreglers (3) starr verbunden ist, und ein Nadelventil umfaßt, dessen Sitz (21) innerhalb des Hohzylinders (14) koaxial zu diesem angeordnet und in die Seitenwand eines Blindstutzens (20) eingebaut ist, welcher mit dem Hohlraum des Gasmengenmessers (2) in Verbindung steht und durch einen Schlitz (18) in der Seitenwand des Zylinders (14) hindurchgeführt ist, und dessen Absperrorgan in Form eines längs der Achse des Zylinders (14) gelegenen Stabes (22) mit einem zugespitzten Aufsatz (23) an einem Ende ausgebildet ist,

- 15 -

wobei das den Aufsatz (23) aufweisende Ende des Stabes (22) durch die Mittenbohrung (17) in der Stirnseite in den Hohlraum des Zylinders (14) eingeführt ist, derart, daß das zugespitzte Stabende zur Zusammenwirkung mit dem Sitz (21) und die Grundfläche des Aufsatzes (23) zur Zusammenwirkung mit der Innenfläche der Stirnseite des Hohlzylinders (14) vorgerichtet ist, während das andere Ende des Stabes (22) in der Büchse (19) so angeordnet ist, daß es mit der geschlossenen Stirnseite der Büchse (19) unter Einwirkung eines elastischen Elementes und der hin- und hergehenden Bewegung zusammenwirken kann.

# INTERNATIONALER RECHERCHENBERICHT

Internationales Aktenzeichen  PCT/SU 86/00125

| I. KLASSIFIZIERUNG DES ANMELDUNGSGEGENSTANDS (bei mehreren Klassifikationssymbolen sind alle anzugeben)[3] |
|---|
| Nach der Internationalen Patentklassifikation (IPC) oder sowohl nach der nationalen Klassifikation als auch nach der IPC |
| $IPC^4$ – G 05 D 7/00 |

## II. RECHERCHIERTE SACHGEBIETE

Recherchierter Mindestprüfstoff[4]

| Klassifikationssystem | Klassifikationssymbole |
|---|---|
| $IPC^4$ | G 05 D 7/00–7/06 |

Recherchierte nicht zum Mindestprüfstoff gehörende Veröffentlichungen, soweit diese unter die recherchierten Sachgebiete fallen[5]

## III. ALS BEDEUTSAM ANZUSEHENDE VERÖFFENTLICHUNGEN[14]

| Art + | Kennzeichnung der Veröffentlichung,[16] mit Angabe, soweit erforderlich, der in Betracht kommenden Teile[17] | Betr. Anspruch Nr.[18] |
|---|---|---|
| A | SU,A1,723520, (Voronezhsky tekhnologichesky institut), 28.Marz 1980 (28.03.80), siehe Patentanspruch, Zeichnung | 1 |
| A | SU, A1,198715, (Angarsky filial Opytno--konstruktorskogo bjuro avtomatiki), 23.August 1967 (23.08.67), siehe Patent-anspruch, Zeichnung | 1 |
| A | DE,A1,3424088, (Honda Giken Kogyo K.K.), 10.Januar 1985 (10.01.85), siehe Ansprüche 9,11-13,15, Fig. 1,11-14 | 1 |

+ Besondere Arten von angegebenen Veröffentlichungen:[15]

"A" Veröffentlichung, die den allgemeinen Stand der Technik definiert
"E" frühere Veröffentlichung, die erst am oder nach dem Anmeldedatum erschienen ist
"L" Veröffentlichung, die aus anderen als den bei den übrigen Arten genannten Gründen angegeben ist
"O" Veröffentlichung, die sich auf eine mündliche Offenbarung, eine Benutzung, eine Ausstellung oder andere Maßnahmen bezieht

"P" Veröffentlichung, die vor dem Anmeldedatum, aber am oder nach dem beanspruchten Prioritatsdatum erschienen ist
"T" Spätere Veröffentlichung die am oder nach dem Anmeldedatum erschienen ist und mit der Anmeldung nicht kollidiert, sondern nur zum Verständnis des der Erfindung zugrundeliegenden Prinzips oder der ihr zugrundeliegenden Theorie angegeben wurde
"X" Veröffentlichung von besonderer Bedeutung

## IV. BESCHEINIGUNG

| Datum des tatsächlichen Abschlusses der Internationalen Recherche[2] | Absendedatum des Internationalen Recherchenberichts[2] |
|---|---|
| 04.Mai 1987 (04.05.87) | 20.Mai 1987 (20.05.87) |
| Internationale Recherchenbehörde[1] ISA/SU | Unterschrift des bevollmächtigten Bediensteten[20] |